# EUROPÄISCHE PATENTSCHRIFT

(11) **EP 0 912 858 B1**
(45) Veröffentlichungstag und Bekanntmachung des Hinweises auf die Patenterteilung: **27.03.2002**
(21) Anmeldenummer: 97933682.3
(22) Anmeldetag: 17.07.1997
(51) Int. Cl.: F16P 1/00

(54) **WANDELEMENT FÜR EINE EINEN ARBEITS- ODER WIRKUNGSBEREICH UMGEBENDE SCHUTZVORRICHTUNG GEGEN LASERSTRAHLEN EINER LASERQUELLE**
WALL ELEMENT FOR A PROTECTIVE DEVICE SURROUNDING AN OPERATING OR WORKING AREA AND PROTECTING AGAINST LASER BEAMS FROM A LASER SOURCE
ELEMENT MURAL POUR UN DISPOSITIF DE PROTECTION ASSURANT UNE PROTECTION CONTRE LES FAISCEAUX LASER D'UNE SOURCE LASER ET ENTOURANT UNE ZONE DE TRAVAIL OU UNE ZONE FONCTIONNELLE

(30) Priorität: 18.07.1996 DE 19629037
(43) Veröffentlichungstag der Anmeldung: 06.05.1999
(73) Patentinhaber: Heberer, Erwin Martin, 63150 Heusenstamm (DE)
(72) Erfinder: Heberer, Erwin Martin, 63150 Heusenstamm (DE)
(74) Vertreter: Müller, Eckhard, Dr.
(86) Internationale Anmeldenummer: EP9703833
(87) Internationale Veröffentlichungsnummer: WO9803815

(56) Entgegenhaltungen:
- EP-A- 0 157 221
- DE-U- 8 908 806
- FR-A- 2 599 467
- GB-A- 2 171 513

## Beschreibung

Die Erfindung betrifft ein Wandelement für eine einen Arbeits- oder Wirkungsbereich umgebende Schutzvorrichtung gegen Laserstrahlen einer Laserquelle, wie einer Kabine, einer Wand oder einer Abschirmung, mit einer dem Arbeits- oder Wirkungsbereich benachbarten Innenwand und einer zur Innenwand im wesentlichen parallelen, vom Arbeits- oder Wirkungsbereich weiter als die Innenwand entfernten Außenwand, wobei die Innenwand und die Außenwand aus Metall, beispielsweise Eisen- oder Stahlblech, bestehen.

Ein derartiges Wandelement ist bereits aus der GB 2171513 A bekannt.

Aus der DE 89 08 806 U1 ist eine weitere Schutzvorrichtung für eine Laserstrahlen-Bearbeitungsmaschine bekannt. Die Wandelemente dieser Schutzvorrichtung bestehen aus einer äußeren Platte, die aus Glas oder Kunstharz besteht, einem an der Innenseite der äußeren Platte meanderförmig angeordneten Schmelzdraht als elektrischem Leiter und aus einer inneren Scheibe, die aus transparentem Kunststoff bzw. aus einem die Laserstrahlen absorbierenden Material besteht. Der Schmelzdraht ist über Leitungen an eine Not-Aus-Schaltung der Bearbeitungsmaschine angeschlossen. Sobald bei einem anormalen Betriebszustand der Bearbeitungsmaschine der Laserstrahl auf eines der Wandelemente auftrifft, schmilzt die Innenscheibe in einem relativ großen Bereich aufgrund des relativ hohen Absorptionsvermögens dieses Scheibenmaterials. Die sich entwickelnden Temperaturen sind ausreichend hoch, um auch den nächstliegenden Leiterdraht durchzuschmelzen und damit den schwachen kontinuierlichen Stromfluß in diesem Leiterdraht zu unterbrechen. Aufgrund der Unterbrechung des Stromflusses durch den Leiterdraht werden die Not-Aus-Schaltung sowie infolge die Laserquelle sowie die Bearbeitungsmaschine abgeschaltet. Dabei soll die Not-Aus-Schaltung ansprechen, bevor die äußere Glasscheibe des Wandelements von dem auftreffenden Laserstrahl durchschmolzen ist.

Des weiteren sind auch Überwachungen von Lichtleiterkabeln im Lasersystem bzw. eine Kontrolle der Laseroptik bekannt. Beim Laserschweißen kann das während des Schweißvorganges entstehende Plasma ebenfalls mit einer Fotozelle überwacht werden. Schließlich besteht auch die Möglichkeit, innerhalb der Laseroptik Systeme vorzusehen, die aufgrund der Restreflexion erfassen, ob der von der Laserquelle ausgesandte Laserstrahl die Optik durchläuft oder unkontrolliert im Raum vagabundiert.

Aufgabe sämtlicher bekannter Überwachungs- bzw. Schutzsysteme ist es, eine Not-Aus-Vorrichtung zu aktivieren, mit der die Laserquelle bzw. die Bearbeitungsvorrichtung außer Betrieb gesetzt wird.

Wie jedoch die praktischen Erfahrungen und auch in der Vergangenheit aufgetretene Unfälle gezeigt haben, können diese bekannten Überwachungssysteme keine hundertprozentige Sicherheit gegen ein Austreten des Laserstrahls aus der Schutzvorrichtung bieten, da die Not-Aus-Vorrichtung nicht in allen denkbaren Störfällen so rasch aktiviert werden kann, daß ein Austreten des Laserstrahls aus der Schutzvorrichtung mit dem damit einhergehenden Durchschmelzen der Schutzvorrichtung sicher vermieden werden kann.

Daß diese bisher bekannten Schutzvorrichtungen keine zufriedenstellenden Ergebnisse geliefert haben, zeigen auch die in den Fachkreisen geführten Diskussionen. So werden zwar in der prEN 12254 vom November 1995 "Abschirmungen an Laser-Arbeitsplätzen" Anforderungen an die für die Wandelemente einzusetzenden Materialien gestellt, jedoch keine Lösungswege angegeben. Weiterhin ist auch der 20. IEC 8254 Entwurf "Laserguards" weltweit diskutiert worden und befindet sich derzeit in einer erneuten Abstimmung. In diesem Entwurf werden passive Wandelemente vorgeschlagen, die im Inneren mit unter Druck stehendem Wasser oder unter Druck stehender Luft gefüllt sind. Solche Wandelemente müßten daher absolut dicht sein, was hohe Produktionskosten bedingt. Darüber hinaus besteht auch die Gefahr, daß im Falle eines Störfalles das Wasser aus dem Wandelement in die Werkshallen oder dergleichen austritt, so daß das Problem elektrischer Gefährdungen besteht. Des weiteren sind bei dem Einsatz derartiger Druckbehälter als Wandelemente unter Umständen weitere technische Vorschriften betreffend Sicherheitsvorschriften für Druckbehälter zu beachten. Weiterhin wurden in dem letztgenannten Entwurf auch aktive Wandelemente einer Schutzvorrichtung für Laserstrahlen angesprochen, die ähnlich wie die passiven Wandelemente aufgebaut sind, bei denen jedoch Sensoren zur Messung des Innendruckes bzw. der Temperaturdifferenz zwischen Innen- und Außenraum vorgesehen sein sollen. Es mag durchaus sein, daß Lösungen dieser Art zu zufriedenstellenden Ergebnissen führen, jedoch ist der konstruktive Aufwand wie auch der Kostenaufwand zur Erstellung und zum Aufbau derartiger Wandelemente äußerst hoch.

Demgegenüber liegt der vorliegenden Erfindung die Aufgabe zugrunde, ein Wandelement der eingangs genannten Art derart weiterzubilden, daß das Wandelement einen äußerst einfachen konstruktiven Aufbau aufweist und die derzeit geltenden Anforderungen der Laserklasse 1 bezüglich Schutzvorrichtungen erfüllt. Danach wird eine Standzeit von 100 Sekunden für das Wandelement gefordert. Dies heißt, daß der Laserstrahl das Wandelement in diesem Zeitraum nicht durchdringen darf. Weiterhin müssen auch die MZB-Werte eingehalten werden. Im Rahmen der vorliegenden Anmeldung sind unter Laserstrahlen bzw. Laserquellen solche Laser zu verstehen, deren Energien ausreichend sind, um Materialien zu zerstören. Bei diesen Laserquellen kann es sich um CO₂-Laser mit einer Leistung bis zu 30 kW, um Ecimer-, Helium-, Argon-, Rubin- und Nd-YAG-Laser handeln.

Diese Aufgabe wird nach der Erfindung im wesentlichen dadurch gelöst, daß die Innenwand wenigstens auf der zum Arbeits- oder Wirkungsbereich weisenden Seitenfläche mit einer Beschichtung versehen ist.

Hierdurch erfolgt eine Absorption der Leistungsdichte des Lasers an der Innenwand und gegebenenfalls Reflexion der Leistungsdichte von der Außenwand zur Innenwand.

So wurde bei einem Störfall beobachtet, daß bei dem Auftreffen des divergenten Laserstrahls auf das Wandelement die auf der Seitenfläche aufgebrachte Beschichtung im Bereich des Auftreffpunktes aufgrund der Erwärmung anfängt zu brennen. Da der von dem Auftreffort radial wegführende Wärmetransport nicht ausreichend schnell genug ist, bleibt der Brandherd beim Einsatz geeigneter Farben eng begrenzt auf einen kreisförmigen Bereich. Die dabei auftretenden Gase führen zu einer über die Eigendivergenz hinausgehende Strahlaufweitung bzw. Strahlverformung (Thermal Blooming), wodurch die Leistungsdichte des Laserstrahls erheblich reduziert wird. Aufgrund der durch die Verbrennung der Beschichtung der Innenwand auftretenden Gase wird auch die Temperatur im Randbereich des divergenten Strahles erheblich verringert.

Von Vorteil besitzt die Beschichtung ein solches hohes Absorptionsvermögen, so daß die Beschichtung bei Auftreffen des Laserstrahls anfängt zu brennen. Von Vorteil besteht die Beschichtung aus schwarzer Farbe.

Weiterhin hat es sich nach einer anderen Ausgestaltung der Erfindung als vorteilhaft erwiesen, daß nicht nur die zum Arbeits- oder Wirkungsbereich weisende Seitenfläche sondern beide Seitenflächen der Innenwand mit der Beschichtung versehen sind. Die zusätzliche Beschichtung der äußeren Seitenfläche der Innenwand bewirkt, daß bei einem Durchbrennen der Innenwand des Wandelements im Störfall eine starke Gas- oder Dampfbildung zwischen der Innenwand und der Außenwand des Wandelements hervorgerufen wird, die für eine weitere Erhöhung der Divergenz beziehungsweise Abschwächung der Leistungsdichte des Laserstrahls sorgt.

Dabei hat es sich als vorteilhaft erwiesen, daß zwischen der Innenwand und der Außenwand mindestens eine Zwischenwand angeordnet ist. Derartige Zwischenwände erweisen sich insbesondere dann als sinnvoll, wenn die Wandelemente zur Abschirmung von Laserstrahlen äußerst hoher Leistung, wie beispielsweise bei Laserquellen des Typs Nd-YAG mit einer Leistung von mehreren Kilowatt eingesetzt werden sollen.

Dabei kann die mindestens eine Zwischenwand aus Metall, etwa Eisen- oder Stahlblech und/oder aus Graphit bzw. graphitbeschichtetem Blech bestehen. Der Einsatz von Graphit oder graphitbeschichtetem Blech erweist sich insbesondere aufgrund des hohen Absorptionsvermögens dieses Materials als sinnvoll. Spezielle Kombinationen von Zwischenwänden innerhalb des Wandelements ermöglichen beispielsweise, daß die Standzeit des Wandelements in einem Störfall über den geforderten Wert von 100 Sekunden hinaus erhöht werden kann oder auch, daß Laserstrahlen mit Laserleistungen oberhalb von 10 kW abgeschirmt werden können.

Gemäß einer anderen vorteilhaften Ausgestaltung der Erfindung besteht die Möglichkeit, daß eine Zwischenwand wenigstens auf Gemäß einer anderen vorteilhaften Ausgestaltung der Erfindung besteht die Möglichkeit, daß eine Zwischenwand wenigstens auf einer Seitenfläche mit einer Beschichtung, insbesondere einer schwarzen Farbbeschichtung, versehen ist. Sollte die Innenwand von dem Laserstrahl im Falle eines Störfalles bereits durchschmolzen worden sein, dient die beschichtete Zwischenwand aufgrund des Verbrennens der aufgetragenen Beschichtung als weitere Quelle zur Abgabe von Gas oder Dampf, so daß der Laserstrahl weiter aufgeweitet und hinsichtlich der Leistungsdichte abgeschwächt wird.

Es hat sich weiterhin als vorteilhaft erwiesen, daß die zur Außenwand benachbarte Zwischenwand eine Farbbeschichtung mit hohem Absorptionsvermögen und die zur Innenwand benachbarte Zwischenwand ein geringes Absorptionsvermögen aufweisen. Auch durch diese spezielle Art der Anordnung kann die Standzeit des Wandelements weiter erhöht bzw. die geforderte Widerstandsfähigkeit auch bei hohen Laserleistungen erreicht werden.

Auch erweist sich in verschiedenen Anwendungsfällen der Einsatz einer aus Graphit oder aus graphitbeschichtetem Blech bestehenden Zwischenwand als sinnvoll.

Der Abstand zwischen der Innenwand und der Außenwand des Wandelements entspricht in etwa dem Durchmesser des Rohstrahls der Laserquelle. Unter dem Rohstrahl wird dabei der Laserstrahl nach Austreten aus der Laserquelle bzw. vor Eintreten in die Laseroptik verstanden. Bei Einhaltung dieser Bemessungsangabe wird eine besonders effektive Aufstreuung des Laserstrahls bzw. Abschwächung der Leistungsdichte erreicht.

Dabei hat es sich als vorteilhaft erwiesen, daß die Abstände benachbarter Wände, etwa Innenwand zu Zwischenwand oder Zwischenwand zu Zwischenwand oder Zwischenwand zu Außenwand ebenfalls in etwa dem Durchmesser des Rohstrahls der Laserquelle entsprechen. Es versteht sich, daß natürlich auch größere Abstände zwischen den Wänden des Wandelements vorgesehen werden können, wobei natürlich ein Kompromiß zwischen der maximalen Dicke des Wandelements und dessen Wirksamkeit gefunden werden muß.

Wie praktische Untersuchungen gezeigt haben, hat sich ein Abstand benachbarter Wände von etwa 60 mm oder mehr als sinnvoll erwiesen.

Nach einer anderen vorteilhaften Weiterbildung der Erfindung beträgt der Abstand zwischen dem Wandelement und der Laserquelle mindestens das vier- bis fünffache der Brennweite der Laseroptik. Grundsätzlich sollte das Wandelement nicht im Fokusbereich bzw. Brennweitenbereich der Laseroptik aufgebaut werden, da hier eine sehr hohe Leistungsdichte des Laserstrahls vorhanden ist. Darüber hinaus wird durch eine derartige Anordnung der Wandelemente auch entsprechenden Sicherheits-bzw. Unfallverhütungsvorschriften Rechnung getragen.

Nach einer anderen Ausführungsform der Erfindung sind die Stirnseiten des mehrschaligen Wandelements bevorzugt allseitig geschlossen. Die Wandelemente lassen sich daher gut handhaben, leicht zu einem größeren Verbund zusammenbauen, wobei zusätzlich dafür gesorgt wird, daß die im Innenraum des Wandelements während eines Störfalls auftretenden Gase oder Dämpfe konzentriert werden und nicht zu schnell entweichen können.

Nach einer weiteren Ausgestaltung der Erfindung weist das Wandelement in einem vertikalen, oberen Abschnitt, bevorzugt im Bereich der Stirnseite, Bohrungen auf. Diese Bohrungen dienen einem kontrollierten Austreten des während eines Störfalles im Inneren des Wandelementes erzeugten Rauchgases.

Eine zusätzliche Sicherheitsmaßnahme ist dadurch geschaffen, daß zwischen der Innenwand und der Außenwand des Wandelements ein Rauch- oder Gas-Sensor angeordnet ist, der mit einer Steuereinheit in Verbindung steht. Diese Steuereinheit kann zur Abgabe von Notsignalen während des Störfalls dienen, was sich insbesondere bei vollautomatischen Laservorrichtungen als sinnvoll erweist, bei denen nicht jederzeit eine Bedienperson anwesend ist. Es besteht jedoch auch die Möglichkeit, mittels der Steuereinheit in entsprechender Weise auf die Laservorrichtung, beispielsweise durch Abschalten oder Leistungsreduzierung oder dergleichen, Einfluß zu nehmen.

Dabei hat es sich nach einer anderen Weiterbildung der Erfindung als vorteilhaft erwiesen, daß wenigstens zwei Sensoren an verschiedenen Positionen in dem Wandelement angeordnet sind. Da nicht auszuschließen ist, daß der Laserstrahl während eines Störfalles gerade auf einen solchen Sensor positioniert ist, erweist sich der Einsatz eines zweiten Sensors im Konzept eines redundanten Systems als sinnvoll.

Als besonders vorteilhaft hat es sich nach der Erfindung herausgestellt, daß die Innen- und Außenwände und ggf. die dazwischen angeordnete wenigstens eine Zwischenwand i. w. miteinander fluchtende aus zwei oder mehreren hintereinander angeordneten Lagen aus Policarbonat oder Glas bestehende Scheiben aufweisen, wodurch eine optische Kontrolle des Arbeitsbereiches von außen durch das Wandelement ermöglicht ist. Dabei hat sich gezeigt, daß derartige Scheibenanordnungen über 100 sec hinaus den Belastungen von CO₂-Lasern und ebenso von Nd-YAG-Lasern standhalten. Offensichtlich ist dies darauf zurückzuführen, daß der Laserstrahl beim Durchdringen der ersten Scheibe bereits erheblich an Energie verliert und seine Mode ändert, so daß es zeitverzögert zu einer Belastung der im Abstand dazu angeordneten weiteren Scheibe kommt. Durch die

Anordnung weiterer Scheiben läßt sich die Zeitverzögerung auf die folgenden Scheiben noch erhöhen.

Bei einer Schutzvorrichtung gegen Laserstrahlen mit mindestens einem Wandelement erweist es sich aus konstruktiver Sicht als vorteilhaft, daß die Schutzvorrichtung eine Rahmenkonstruktion aufweist, wobei der Rahmen durch Stahlträger gebildet ist und die Wände an dem Rahmen befestigt sind.

Die Erfindung wird nachfolgend anhand der in den Zeichnungen dargestellten Ausführungsbeispielen näher erläutert.

Es zeigen:
- Fig. 1: ein erstes Ausführungsbeispiel des erfindungsgemäßen Wandelements mit einer Innen- und Außenwand,
- Fig. 2: ein zweites Ausführungsbeispiel des erfindungsgemäßen Wandelements gemäß Fig. 1 mit einer zusätzlichen Zwischenwand,
- Fig. 3: eine weitere Ausführungsform des erfindungsgemäßen Wandelements gemäß Fig. 1, jedoch mit zwei Zwischenwänden,
- Fig. 4: eine weitere Ausführungsform des erfindungsgemäßen Wandelements gemäß Fig. 1, jedoch mit zwei Zwischenwänden, wobei die eine Zwischenwand aus Graphit besteht oder mit Graphit beschichtet ist und
- Fig. 5: eine weitere Ausführungsform des erfindungsgemäßen Wandelements gemäß Fig. 1, jedoch mit im Innenraum angeordneten Rauchsensoren.

Das in den Fig. dargestellte Wandelement 10 einer Schutzvorrichtung für Laserstrahlen einer Laserquelle 38 weist wenigstens eine Innenwand 12 und eine im wesentlichen parallele Außenwand 14 auf. Die Innenwand 12 und die Außenwand 14 bestehen aus Metall, bevorzugt Eisen- oder Stahlblech, wobei die Innenwand 12 wenigstens auf der zum Arbeits- oder Wirkungsbereich weisenden Seitenfläche 18, bevorzugt auch auf der äußeren Seitenfläche 20 mit einer Beschichtung 16 versehen ist. Die Beschichtung 16 kann bevorzugt eine Farbbeschichtung mit hohem Absorptionsvermögen sein, z. B. aus schwarzer Farbe oder dergleichen bestehen. Die der Innenwand 12 zugewandte Seitenfläche 22 der Außenwand 14 weist ein geringeres Absorptionsvermögen auf. Dieses geringere Absorptionsvermögen bzw. höhere Reflexionsvermögen der Seitenfläche 22 der Außenwand 14 wird in der Praxis beispielsweise bereits dadurch erreicht, daß ein weitgehend unbehandeltes Eisen- oder Stahlblech, welches bereits eine reflektierende Oberfläche aufweist, als Außenwand 14 eingesetzt wird. Natürlich ist nicht ausgeschlossen, daß spezielle Behandlungen oder Bearbeitungen der der Innenwand 12 zugewandten Seitenfläche 22 der Außenwand 14 vorgenommen werden, um das Reflexionsvermögen zu erhöhen. Weiterhin ist bevorzugt auch die Seitenfläche 20 der Innenwand 12 mit der Beschichtung versehen.

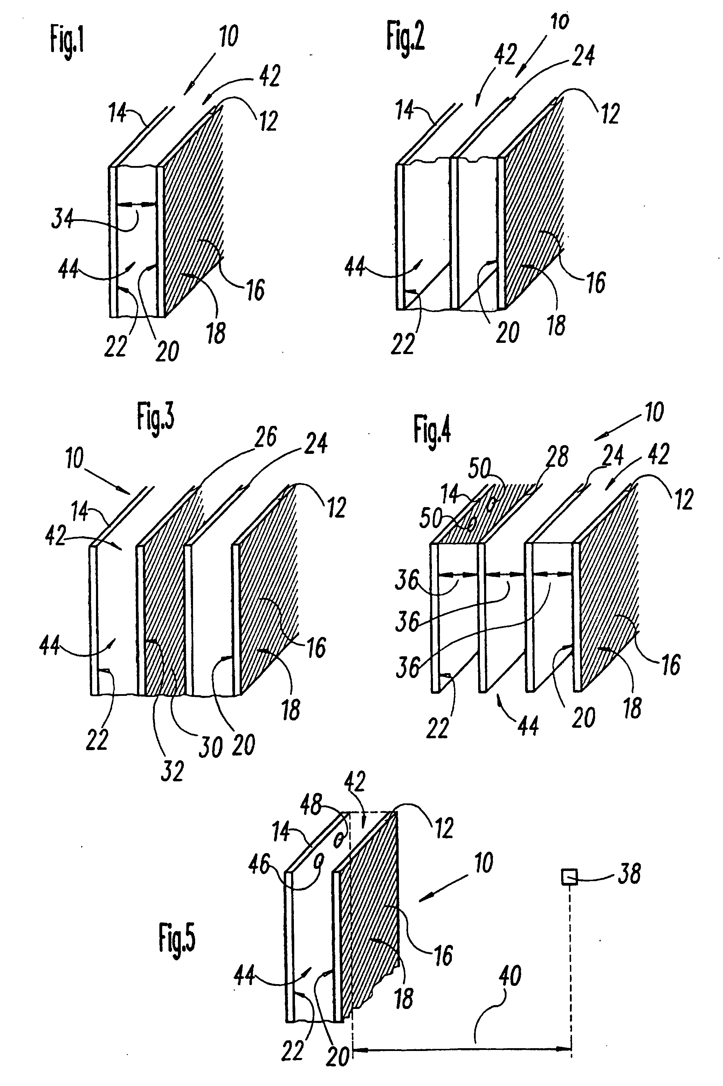

Gemäß dem Ausführungsbeispiel der Fig. 2 ist im Zwischenraum zwischen der Innenwand 12 und der Außenwand 14 eine Zwischenwand 24 vorgesehen, die beidseitig unbeschichtet ist und somit ein geringes Absorptionsvermögen bzw. hohes Reflexionsvermögen besitzt. Es versteht sich, daß die Zwischenwand 24 jedoch auch einflächig oder auch zweiflächig mit einer Farbbeschichtung mit hohem Absorptionsvermögen beschichtet werden. Dies richtet sich nach dem speziellen Einsatzzweck.

Gemäß dem Ausführungsbeispiel der Fig. 3 sind zwei Zwischenwände 24, 26 vorgesehen, wobei die Zwischenwand 24 gemäß einem speziellen Ausführungsbeispiel unbeschichtet, d. h. reflektierend und die Zwischenwand 26 beschichtet, d. h. absorbierend sind.

Nach dem Ausführungsbeispiel der Fig. 4 sind wiederum zwei Zwischenwände 24, 28 zwischen der Innenwand 12 und der Außenwand 14 des Wandelements 10 positioniert, wobei die Zwischenwand 28 in diesem Fall aus Graphit oder einem graphitbeschichteten Blech besteht. Die Zwischenwand 24 ist hingegen unbeschichtet und weist ein hohes Reflexionsvermögen auf.

Es versteht sich, daß dem jeweiligen Anwendungsfall angepaßte Abwandlungen und Modifikationen der vorgestellten Ausführungsbeispiele in beliebiger Kombination einsetzbar sind. Der grundsätzliche Gedanke der vorliegenden Erfindung besteht darin, im Falle des Auftretens eines Störfalles gezielt Gase, Dämpfe oder Rauchgase durch entsprechende Ausgestaltung des Wandelementes 10 zu erzeugen. Hierzu sind einzelne Wände vorgesehen, die eine Beschichtung 16 aufweisen. So kann beispielsweise die Zwischenwand 26 zumindest auf der inneren Seitenfläche 32, oder auch zusätzlich auf der äußeren Seitenfläche eine Farbbeschichtung 30 besitzen. Die Abstände 34, 36 zwischen den einzelnen Wänden 12, 14, 24, 26, 28 entsprechen in etwa im wesentlichen dem Durchmesser des Rohstrahls der Laserquelle 38. In der Praxis hat sich ein Abstand 34 bzw. 36 benachbarter Wände 12, 14, 24, 26, 28 von etwa 60 mm oder mehr als sinnvoll erwiesen. Der Abstand 40 des Wandelements 10 von der Laserquelle 38 sollte in etwa das Vierbis Fünffache der Brennweite der Laseroptik betragen.

Die Stirnseiten 42, 44 des mehrschaligen Wandelements 10 sind bevorzugt allseitig im wesentlichen geschlossen. Dabei können jedoch bevorzugt in einem vertikalen, oberen Abschnitt, bevorzugt im Bereich der Stirnseite 42, Bohrungen 50 angeordnet sein, wie dies schematisch und beispielhaft in Fig. 4 dargestellt ist. Der konstruktive Aufbau des Wandelements 10 bedient sich beispielsweise einer Rahmenkonstruktion, wobei der Rahmen durch Stahlträger oder dergleichen Profilträger gebildet ist und die Wände 14, 16, 24, 26, 28 an dem Rahmen befestigt sind.

Gemäß dem Ausführungsbeispiel der Fig. 5 sind in dem Zwischenraum zwischen der Innenwand 12 und der Außenwand 14 des Wandelements 10 bevorzugt zwei Rauch- oder Gas-Sensoren 46, 48 angeordnet, die mit einer Steuereinheit in Verbindung stehen.

### Bezugszeichenliste

- 10 -: Wandelement
- 12 -: Innenwand
- 14 -: Außenwand
- 16 -: Beschichtung
- 18 -: Seitenfläche
- 20 -: Seitenfläche
- 22 -: Seitenfläche
- 24 -: Zwischenwand (blank)
- 26 -: Zwischenwand (schwarz)
- 28 -: Zwischenwand (Graphit)
- 30 -: Farbbeschichtung
- 32 -: Seitenfläche
- 34 -: Abstand
- 36 -: Abstand
- 38 -: Laserquelle
- 40 -: Abstand
- 42 -: Stirnseite
- 44 -: Stirnseite
- 46 -: Sensor
- 48 -: Sensor
- 50 -: Bohrungen

## Patentansprüche

1. Wandelement (10) für eine einen Arbeits- oder Wirkungsbereich umgebende Schutzvorrichtung gegen Laserstrahlen einer Laserquelle (38), wie einer Kabine, einer Wand oder einer Abschirmung, mit einer dem Arbeits- oder Wirkungsbereich benachbarten Innenwand (12) und einer zur Innenwand (12) im wesentlichen parallelen, vom Arbeits- oder Wirkungsbereich weiter als die Innenwand (12) entfernten Außenwand (14), wobei die Innenwand (12) und die Außenwand (14) aus Metall, beispielsweise Eisen- oder Stahlblech bestehen, **dadurch gekennzeichnet, daß** die Innenwand (12) wenigstens auf der zum Arbeits- oder Wirkungsbereich weisenden Seitenfläche (18) mit einer Beschichtung (16) versehen ist und die der Innenwand (12) zugewandte Seitenfläche (22) der Außenwand (14) ein geringeres Absorptionsvermögen als die Beschichtung (16) besitzt.

2. Wandelement nach Anspruch 1, **dadurch gekennzeichnet, daß** die Beschichtung (16) ein derart hohes Absorptionsvermögen besitzt, so daß die Beschichtung (16) bei Auftreffen des Laserstrahls anfängt zu brennen, und bevorzugt aus schwarzer Farbe besteht.

3. Wandelement nach Anspruch 1 oder 2, **dadurch gekennzeichnet, daß** die beiden Seitenflächen (18, 20) der Innenwand (12) mit der Beschichtung versehen sind.

4. Wandelement nach einem der vorhergehenden Ansprüche, **dadurch gekennzeichnet, daß** zwischen der Innenwand (12) und der Außenwand (14) mindestens eine Zwischenwand (24, 26, 28) angeordnet ist.

5. Wandelement nach Anspruch 4, **dadurch gekennzeichnet, daß** die mindestens eine Zwischenwand (24, 28) aus Metall, etwa Eisen- oder Stahlblech und/oder aus Graphit bzw. graphitbeschichtetem Blech besteht.

6. Wandelement nach einem der Ansprüche 4 oder 5, **dadurch gekennzeichnet, daß** eine Zwischenwand (26) wenigstens auf einer Seitenfläche (32) mit einer Beschichtung (18), insbesondere mit einer schwarzen Farbbeschichtung (30), versehen ist.

7. Wandelement nach einem der Ansprüche 4 bis 6, **dadurch gekennzeichnet, daß** die zur Außenwand (14) benachbarte Zwischenwand (26) eine Farbbeschichtung (30) mit hohem Absorptionsvermögen und die zur Innenwand (12) benachbarte Zwischenwand (24) ein geringes Absorptionsvermögen aufweisen.

8. Wandelement nach einem der Ansprüche 4 bis 7, **dadurch gekennzeichnet, daß** eine Zwischenwand (28) aus Graphit oder graphitbeschichtetem Blech besteht.

9. Wandelement nach einem der vorhergehenden Ansprüche, **dadurch gekennzeichnet, daß** der Abstand (34) zwischen Innenwand (12) und Außenwand (14) in etwa dem Durchmesser des Rohstrahls der Laserquelle (38) entspricht.

10. Wandelement nach einem der vorhergehenden Ansprüche 4 bis 8, **dadurch gekennzeichnet, daß** die Abstände (36) benachbarter Wände, etwa Innenwand (12) zu Zwischenwand (24) oder Zwischenwand (24) zu Zwischenwand (26, 28) oder Zwischenwand (24, 26, 28) zu Außenwand (14) in etwa dem Durchmesser des Rohstrahls der Laserquelle (38) entsprechen.

11. Wandelement nach einem der vorhergehenden Ansprüche, **dadurch gekennzeichnet, daß** der Abstand (34, 36) benachbarter Wände (12, 14, 24, 26, 28) mindestens 60 mm beträgt.

12. Wandelement nach einem der vorhergehenden Ansprüche, **dadurch gekennzeichnet, daß** der Abstand (40) zwischen Wandelement (10) und Laserquelle (38) mindestens das Vier- bis Fünffache der Brennweite der Laseroptik beträgt.

13. Wandelement nach einem der vorhergehenden Ansprüche, **dadurch gekennzeichnet, daß** die Stirnseiten (42, 44) des mehrschaligen Wandelements (10) bevorzugt allseitig geschlossen sind.

14. Wandelement nach Anspruch 13, **dadurch gekennzeichnet, daß** in einem vertikalen oberen Abschnitt, bevorzugt im Bereich der Stirnseite (42), Bohrungen (50) angeordnet sind.

15. Wandelement nach einem der vorhergehenden Ansprüche, **dadurch gekennzeichnet, daß** zwischen der Innenwand (12) und der Außenwand (14) ein Rauch- oder Gas-Sensor (46, 48) angeordnet ist, der mit einer Steuereinheit in Verbindung steht.

16. Wandelement nach Anspruch 15, **dadurch gekennzeichnet, daß** wenigstens zwei Sensoren (46, 48) an verschiedenen Positionen in dem Wandelement (10) angeordnet sind.

17. Wandelement nach einem der vorhergehenden Ansprüche, **dadurch gekennzeichnet, daß** Innen- und Außenwand (12 bzw. 14) und ggf. die dazwischen angeordnete wenigstens eine Zwischenwand (24, 26, 28) i. w. miteinander fluchtende Scheiben aus Policarbonat oder Glas aufweisen.

18. Wandelement nach Anspruch 17, **dadurch gekennzeichnet, daß** die Scheiben wenigstens aus zwei, vorzugsweise mehreren hintereinander angeordnete Lagen gebildet sind.

19. Schutzvorrichtung gegen Laserstrahlen mit mindestens einem Wandelement nach einem der vorhergehenden Ansprüche, **dadurch gekennzeichnet, daß** die Schutzvorrichtung eine Rahmenkonstruktion aufweist, wobei der Rahmen durch Stahlträger gebildet ist und die Wände (14, 16, 24, 26, 28) an dem Rahmen befestigt sind.

## Claims

1. Wall element (10) for a protective device, which surrounds a working or operating region, against laser beams of a laser source (38), such as a cabin, a wall or a screen, with an inner wall (12) adjacent to the working or operating region and an outer wall (14) substantially parallel to the inner wall (12) and spaced further from the working or operating region than the inner wall (12), wherein the inner wall (12) and the outer wall (14) consist of metal, for example iron or steel sheet, **characterised in that** the inner wall (12) is provided with a coating (16) at least on the side surface (18) facing the working or operating region and the side surface (22), which faces the inner wall (12), of the outer wall (14) has a lesser absorption capability than the coating (16).

2. Wall element according to claim 1, **characterised in that** the coating (16) has a high absorption capability of such a kind that the coating (16) on incidence of the laser beam begins to burn and preferably consists of black colour.

3. Wall element according to claim 1 or 2, **characterised in that** the two side surfaces (18, 20) of the inner wall (12) are provided with the coating.

4. Wall element according to one of the preceding claims, **characterised in that** at least one intermediate wall (24, 26, 28) is arranged between the inner wall (12) and the outer wall (14).

5. Wall element according to claim 4, **characterised in that** the at least one intermediate wall (24, 28) consists of metal, for example iron or steel sheet, and/or of graphite or graphite-coated sheet metal.

6. Wall element according to one of claims 4 and 5, **characterised in that** an intermediate wall (26) is provided with a coating (18), especially with a black colour coating (30), on at least one side surface (32).

7. Wall element according to one of claims 4 to 6, **characterised in that** the intermediate wall (26) adjacent to the outer wall (14) has a colour coating (30) with high absorption capability and the intermediate wall (24) adjacent to the inner wall (12) has a low absorption capability.

8. Wall element according to one of claims 4 to 7, **characterised in that** an intermediate wall (28) consists of graphite or graphite-coated sheet metal.

9. Wall element according to one of the preceding claims, **characterised in that** the spacing (34) between inner wall (12) and outer wall (14) approximately corresponds with the diameter of the primary beam of the laser source (38).

10. Wall element according to one of the preceding claims 4 to 8, **characterised in that** the spacings (36) of adjacent walls, for example inner wall (12) to intermediate wall (24) or intermediate wall (24) to intermediate wall (26, 28) or intermediate wall (24, 26, 28) to outer wall (14), approximately correspond with the diameter of the primary beam of the laser source (38).

11. Wall element according to one of the preceding claims, **characterised in that** the spacing (34, 36) of adjacent walls (12, 14, 24, 26, 28) amounts to at least 60 mm.

12. Wall element according to one of the preceding claims, **characterised in that** the spacing (40) between wall element (10) and laser source (38) amounts to at least four to five times the focal length of the laser optical system.

13. Wall element according to one of the preceding claims, **characterised in that** the end faces (42, 44) of the multi-skin wall element (10) are preferably closed all round.

14. Wall element according to claim 13, **characterised in that** bores (50) are arranged at a vertical upper portion, preferably in the region of the end face (42).

15. Wall element according to one of the preceding claims, **characterised in that** a smoke or gas sensor (46, 48), which is connected with a control unit, is arranged between the inner wall (12) and the outer wall (14).

16. Wall element according to claim 15, **characterised in that** at least two sensors (46, 48) are arranged at different positions in the wall element (10).

17. Wall element according to one of the preceding claims, **characterised in that** inner and outer wall (12 and 14) and optionally the at least one intermediate wall (24, 26, 28) arranged therebetween have substantially mutually aligned panes of polycarbonate or glass.

18. Wall element according to claim 17, **characterised in that** the panes are formed from at least two, preferably several, layers arranged one behind the other.

19. Protective device against laser radiation with at least one wall element according to one of the preceding claims, **characterised in that** the protective device comprises a frame construction, wherein the frame is formed by steel beams and the walls (14, 16, 24, 26, 28) are fastened to the frame.

## Revendications

1. Elément de paroi (10) pour un dispositif de protection entourant une zone de travail ou d'activité vis-à-vis de faisceaux laser d'une source laser (38), comme par exemple une cabine, une paroi ou un élément de protection, comportant une paroi intérieure (12) voisine de la zone de travail ou d'activité et une paroi extérieure (14) essentiellement parallèle à la paroi intérieure (12) et plus éloignée de la zone de travail ou d'activité que ne l'est la paroi intérieure (12), la paroi intérieure (12) et la paroi extérieure (14) étant réalisées en un métal, par exemple en une tôle de fer ou d'acier, **caractérisé en ce que** la paroi intérieure (12) est pourvue, au moins sur la surface latérale (18) tournée vers la zone de travail ou d'activité, d'un revêtement (16) et que la surface latérale (22), tournée vers la paroi intérieure (12), de la paroi extérieure (14) possède un pouvoir absorbant inférieur à celui du revêtement (16).

2. Elément de paroi selon la revendication 1, **caractérisé en ce que** le revêtement (16) possède un pouvoir absorbant élevé tel que le revêtement (16) commence à brûler lors de l'impact du faisceau laser, et possède de préférence la couleur noire.

3. Elément de paroi selon la revendication 1 ou 2, **caractérisé en ce que** les deux surfaces latérales (18, 20) de la paroi intérieure (12) sont pourvues du revêtement.

4. Elément de paroi selon l'une des revendications précédentes, **caractérisé en ce qu'**au moins une paroi intercalaire (24, 26, 28) est disposée entre la paroi intérieure (12) et la paroi extérieure (14).

5. Elément de paroi selon la revendication 4, **caractérisé en ce que** la au moins une paroi intercalaire (24, 28) est formée d'un métal, par exemple d'une tôle de fer ou d'acier et/ou en graphite ou par une tôle recouverte de graphite.

6. Elément de paroi selon l'une des revendications 4 ou 5, **caractérisé en ce qu'**une paroi intercalaire (26) comporte, au moins sur une surface latérale (32), un revêtement (18), notamment un revêtement de couleur noire (30).

7. Elément de paroi selon l'une des revendications 4 à 6, **caractérisé en ce que** la paroi intercalaire (26), voisine de la paroi extérieure (14), possède un revêtement coloré (30) possédant un pouvoir absorbant élevé et que la paroi intercalaire (24) voisine de la paroi intérieure (12) possède un faible pouvoir absorbant.

8. Elément de paroi selon l'une des revendications 4 à 7, **caractérisé en ce qu'**une paroi intercalaire (28) est réalisée en graphite ou en une tôle recouverte de graphite.

9. Elément de paroi selon l'une des revendications précédentes, **caractérisé en ce que** la distance (34) entre la paroi intérieure (12) et la paroi extérieure (14) correspond approximativement au diamètre du faisceau brut de la source laser (38).

10. Elément de paroi selon l'une des revendications précédentes 4 à 8, **caractérisé en ce que** les distances (36) de parois voisines, par exemple de la paroi intérieure (12) par rapport à la paroi intercalaire (24) ou de la paroi intercalaire (24) par rapport à la paroi intercalaire (26, 28) ou de la paroi intercalaire (24, 26, 28) par rapport à la paroi extérieure (14), correspondent approximativement au diamètre du faisceau brut de la source laser (38).

11. Elément de paroi selon l'une des revendications précédentes, **caractérisé en ce que** la distance (34, 36) de parois voisines (12, 14, 24, 26, 28) est égale au moins à 60 mm.

12. Elément de paroi selon l'une des revendications précédentes, **caractérisé en ce que** la distance (40) entre l'élément de paroi (10) et la source laser (38) est comprise entre au moins le quadruple et le quintuple de la distance focale du système optique du laser.

13. Elément de paroi selon l'une des revendications précédentes, **caractérisé en ce que** les faces frontales (42, 44) de l'élément de paroi (10) à plusieurs coques sont de préférence fermées de tous côtés.

14. Elément de paroi selon la revendication 13, **caractérisé en ce que** des perçages (50) sont formés dans une partie supérieure verticale, de préférence dans la zone de la face frontale (42).

15. Elément de paroi selon l'une des revendications précédentes, **caractérisé en ce qu'**entre la paroi intérieure (12) et la paroi extérieure (14) est disposé un détecteur de fumée ou de gaz (46, 48), qui est relié à une unité de commande.

16. Elément de paroi selon la revendication 15, **caractérisé en ce qu'**au moins deux capteurs (46, 48) sont disposés dans des positions différentes dans l'élément de paroi (10).

17. Elément de paroi selon l'une des revendications précédentes, **caractérisé en ce que** la paroi intérieure et la paroi extérieure (12 et 14), et éventuellement une paroi intercalaire (24, 26, 28) disposée entre ces parois, comportent des plaques de polycarbonate ou de verre essentiellement alignées entre elles.

18. Elément de paroi selon la revendication 17, **caractérisé en ce que** les plaques sont formées de deux couches et de préférence de plusieurs couches les unes derrière les autres.

19. Dispositif de protection contre les faisceaux laser comportant au moins un élément de paroi selon l'une des revendications précédentes, **caractérisé en ce que** le dispositif de protection possède une structure en forme de cadre, dans lequel le cadre est formé par des supports en acier et les parois (14, 16, 24, 26, 28) sont fixées sur le cadre.
